# EUROPEAN PATENT APPLICATION

(11) **EP 4 502 725 A1**
(43) Date of publication of application: **05.02.2025**
(21) Application number: 24163330.4
(22) Date of filing: 13.03.2024
(51) Int. Cl.: G03B 9/06

(54) **APERTURE STRUCTURE, LENS ASSEMBLY AND TERMINAL**

(30) Priority: 31.07.2023 CN 202310955328
(71) Applicant: Beijing Xiaomi Mobile Software Co., Ltd., Beijing 100085 (CN)
(72) Inventor: WANG, Hui, Beijing, 100085 (CN); WANG, Bin, Beijing, 100085 (CN)
(74) Representative: Stöckeler, Ferdinand

(57) **Abstract**

An aperture structure includes a substrate (1), a blade (2) and a shielding assembly (3). The blade (2) has a light transmitting hole (21). The shielding assembly (3) and the light transmitting hole (21) form a first aperture hole (10) having a polygonal shape. The blade (2) and/or the shielding assembly (3) are movably arranged on the substrate (1) in a first direction, to change the size of the first aperture hole (10).

## Description

### FIELD

The present invention relates to the field of apertures, and more particularly to an aperture structure, a lens assembly and a terminal.

### BACKGROUND

At present, variable apertures are a technology that may adjust the amount of light entering a lens, which may allow users to take more suitable photos in different lighting conditions. The main visual impact generated by the change in a size of an aperture is the change in depth of field.

### SUMMARY

The purpose of the present invention is to provide an aperture structure, which may solve the technical problem that the blades are prone to getting stuck.

The invention is set out in the appended set of claims.

According to a first aspect of the present invention, an aperture structure is provided, including a substrate, a blade and a shielding assembly. The blade has a light transmitting hole. The shielding assembly and the light transmitting hole form a first aperture hole having a polygonal shape. The blade and/or the shielding assembly are movably arranged on the substrate in a first direction, to change a size of the first aperture hole.

Optionally, the blade and the shielding assembly are movably arranged on the substrate in the first direction.

Optionally, the aperture structure includes at least two blades, the at least two blades are stacked together with the shielding assembly in a second direction perpendicular to the first direction, and the shielding assembly and at least two light transmitting holes cooperatively form the first aperture hole having the polygonal shape.

Optionally, the aperture structure includes two blades, and the shielding assembly and the two light transmitting holes cooperatively form the first aperture hole having a regular hexagonal shape.

Optionally, the shielding assembly comprises two baffle plates, each of the two baffle plates is movably arranged on the substrate in the first direction, and each of the two baffle plates has a straight edge; each light transmitting hole has a first sub hole having a triangular shape, two first edges of each first sub hole form a vertex angle, a center line of each first sub hole at the vertex angle extends along the first direction, and when the two blades move, two first edges of two first sub holes at a same side are crossed; and two straight edges of the two baffle plates and the two first sub holes cooperatively form the first aperture hole.

Optionally, the two straight edges of the two baffle plates are adjacent in the first direction.

Optionally, each of the two baffle plates is configured as a rectangular plate.

Optionally, the two blades are arranged between the substrate and the two baffle plates.

Optionally, the substrate has a through hole, and the first aperture hole is arranged such that a projection of the first aperture hole in the second direction is located in the through hole; each light transmitting hole has a second sub hole in communication with the first sub hole, and when the two blades move, two second sub holes form an avoidance hole; and when the blades move to a position where a projection of the through hole in the second direction is located in the avoidance hole, the through hole is configured as a second aperture hole.

Optionally, the through hole is configured as a circular hole.

Optionally, each second sub hole has five second edges connected in sequence, and when the two blades move, the two second sub holes form the avoidance hole having an octagonal shape.

According to a second aspect of the present invention, a lens assembly is provided, including an aperture structure as described above.

According to a third aspect of the present invention, a terminal is provided, including a lens assembly as described above.

Through the above technical solution, in the aperture structure provided by the present invention, when the shielding assembly moves in the first direction, the relative position between the shielding assembly and the light transmitting hole will change, thus the shielding amount and the shielding position of the shielding assembly on the light transmitting hole will change, therefore, the size of the first aperture hole may be changed. In the same way, when the blade moves in the first direction, or when the blade and the shielding assembly both move in the first direction, the shielding amount and the shielding position of the shielding assembly on the light transmitting hole will also change, thus, the size of the first aperture hole may also be changed. Here, compared to the related art of adjusting the size of the aperture by rotation of the blades, the size of the first aperture hole may be adjusted by linear motion of the blade in the present invention, and the blade basically will not get stuck during the linear motion. Furthermore, when the shielding assembly moves and the blade remains stationary, the blade also will not get stuck, so the aperture structure of the present invention may solve the technical problem that the blades are prone to getting stuck.

In addition, since the shielding assembly and/or the blade adjust the size of the first aperture hole by means of linear motion, it is conducive to achieving stepless adjustment of the size of the first aperture hole. Moreover, the first aperture hole is configured as a polygonal shape, which may also facilitate stepless adjustment of the size of the first aperture hole when the shielding assembly and/or the blade move in the first direction.

The other features and advantages of the present invention will be explained in detail in the following specific embodiments section.

### BRIEF DESCRIPTION OF THE DRAWINGS

The drawings are intended to provide a further understanding of the present invention, form a part of the specification, and are used to explain the present invention together with the specific embodiments below, but do not constitute a limitation of the present invention, in which:
FIG. 1 is a schematic perspective view of an aperture structure according to a first embodiment of the present invention;
FIG. 2 is an exploded view of an aperture structure according to a first embodiment of the present invention;
FIG. 3 is a schematic view of an aperture structure in a first state according to a first embodiment of the present invention;
FIG. 4 is a schematic view of an aperture structure in a second state according to a first embodiment of the present invention;
FIG. 5 is a schematic view of an aperture structure in a third state according to a first embodiment of the present invention;
FIG. 6 is a structural schematic view of an aperture structure according to a second embodiment of the present invention;
FIG. 7 is a structural schematic view of an aperture structure according to a third embodiment of the present invention.

### References signs:

1-substrate, 11-through hole, 2-blade, 21-light transmitting hole, 211-first sub hole, 2111-first edge, 2112-vertex angle, 212-second sub hole, 2121-second edge, 3-shielding assembly, 31-baffle plate, 3 11-straight edge, 4-base, 41-light through hole, 10-first aperture hole, 20-avoidance hole.

### DETAILED DESCRIPTION

Embodiments of the present invention are described in detail below in conjunction with the drawings. It should be understood that the specific embodiments described herein are intended to explain the present invention, but not to limit the present invention.

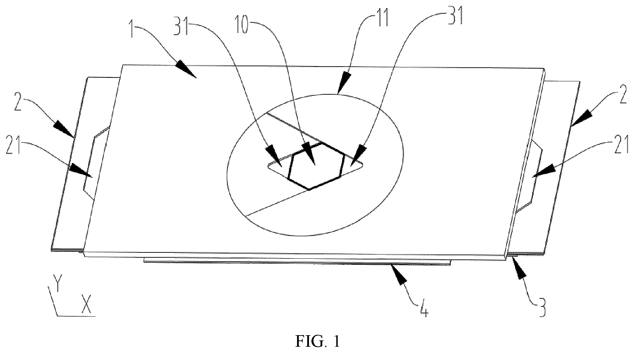

In the present invention, unless otherwise expressly defined, terms of orientation such as "the first direction" and "the second direction" used may refer to the XY coordinate system in FIG. 1. Specifically, the X direction refers to the first direction, and the Y direction refers to the second direction. "Inner" and "outer" refer to inner and outer of a contour of each component. Terms such as "first" and "second" used are intended to distinguish one element from another and are not sequential or important. In addition, in the following description, when referring to the drawings, the same references sign in different drawings indicates the same or similar element, which is not repeated in the present invention.

In the related art, the current variable apertures are generally adjusted by a group of blades. Specifically, a plurality of blades in the group of blades rotates and fits to change the size of the aperture. However, the blades are prone to getting stuck when rotating, which affects the user experience.

According to exemplary embodiments of the present invention, an aperture structure is provided. As illustrated in FIGS. 1 to 4 and FIGS. 6 and 7, the aperture structure includes a substrate 1, a blade 2 and a shielding assembly 3. The blade 2 has a light transmitting hole 21. The shielding assembly 3 and the light transmitting hole 21 form a first aperture hole 10 having a polygonal shape. The blade 2 and/or the shielding assembly 3 are movably arranged on the substrate 1 in a first direction, to change a size of the first aperture hole 10.

Through the above technical solution, in the aperture structure provided by the present invention, when the shielding assembly 3 moves in the first direction, the relative position between the shielding assembly 3 and the light transmitting hole 21 will change, thus the shielding amount and the shielding position of the shielding assembly 3 on the light transmitting hole 21 will change, therefore, the size of the first aperture hole 10 may be changed. In the same way, when the blade 2 moves in the first direction, or when the blade 2 and the shielding assembly 3 both move in the first direction, the shielding amount and the shielding position of the shielding assembly 3 on the light transmitting hole 21 will also change, thus, the size of the first aperture hole 10 may also be changed. Here, compared to the related art of adjusting the size of the aperture by rotation of the blades, the size of the first aperture hole 10 may be adjusted by linear motion of the blade 2 in the present invention, and the blade 2 basically will not get stuck during the linear motion. Furthermore, when the shielding assembly 3 moves and the blade 2 remains stationary, the blade 2 also will not get stuck, so the aperture structure of the present invention may solve the technical problem that the blades 2 are prone to getting stuck.

In addition, since the shielding assembly 3 and/or the blade 2 adjust the size of the first aperture hole 10 by means of linear motion, it is conducive to achieving stepless adjustment of the size of the first aperture hole 10. Moreover, the first aperture hole 10 is configured as a polygonal shape, which may also facilitate stepless adjustment of the size of the first aperture hole 10 when the shielding assembly 3 and/or the blade 2 move in the first direction.

It should be noted that the first aperture hole 10 having the "polygonal shape" in the present invention may be understood as the first aperture hole having at least three edges. For example, the first aperture hole 10 may have a triangular shape, a quadrilateral shape, etc. In addition, the specific structure of the shielding assembly 3 is not limited in the present invention, which will be described in detail in the following embodiments of the present invention. Moreover, the present invention does not limit the specific structure of a driving structure that drives the shielding assembly 3 or the blade 2 to move. For example, the driving structure may include a linear motor that may drive the shielding assembly 3 or drive the blade 2 to move in the first direction. The driving structure may also include an electromagnetic driving assembly. The electromagnetic driving assembly may include a first electromagnetic member and a second electromagnetic member, one of the first electromagnetic member and the second electromagnetic member is arranged on the substrate 1, the other is arranged on the shielding assembly 3 or the blade 2, and the first electromagnetic member and the second electromagnetic member are spaced apart in the first direction. When the first electromagnetic member and the second electromagnetic member are energized, there may be an attractive force that may attract each other or a repulsive force that may repel each other between the first electromagnetic member and the second electromagnetic member. Therefore, the movement of the shielding assembly 3 or the blade 2 in the first direction may also be achieved by the electromagnetic driving assembly.

In the exemplary embodiments of the present invention, as illustrated in FIGS. 1 to 4 and FIG. 6 and FIG. 7, the blade 2 and the shielding assembly 3 are movably arranged on the substrate 1 in the first direction. In this way, when the blade 2 and the shielding assembly 3 both move in the first direction, the change of the relative position between the light transmitting hole 21 and the shielding assembly 3 may achieve the adjustment of the size of the first aperture hole 10, and at the same time, it is conducive to keeping a central axis of the first aperture hole 10 stationary relative to the substrate, that is, it is conducive to keeping the position of the central axis of the first aperture hole 10 unchanged. For example, when the size of the first aperture hole 10 changes from a first value to a second value, the central axis of the first aperture hole 10 remains in a same position.

In the exemplary embodiments of the present invention, as illustrated in FIGS. 1 to 4, the number of blades 2 may be at least two, the at least two blades 2 are stacked together with the shielding assembly 3 in a second direction perpendicular to the first direction, and the shielding assembly 3 and at least two light transmitting holes 21 may cooperatively form the first aperture hole 10 having the polygonal shape. In this way, by arranging the at least two blades 2, the number of light transmitting holes 21 may be increased. Therefore, through the cooperation of the shielding assembly 3 and the at least two light transmitting holes 21, it is conducive to enriching the change in the shape of the first aperture hole 10, that is, it is conducive to configuring the first aperture hole 10 as a plurality of types of polygonal holes, thereby improving the adaptability of the aperture structure.

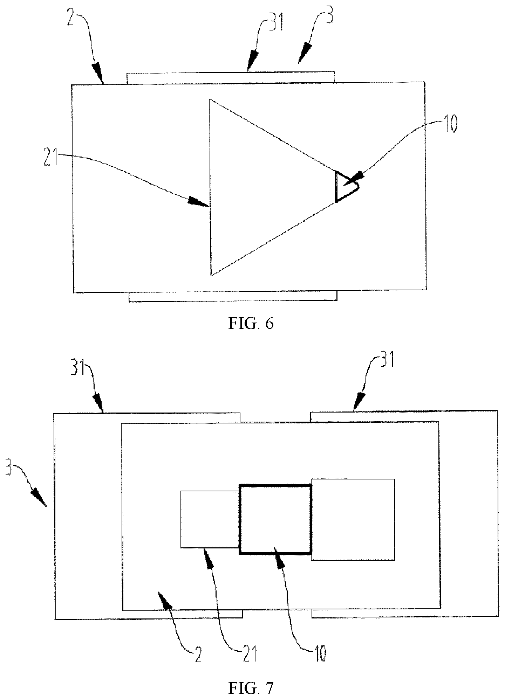

In other embodiments of the present invention, as illustrated in FIG. 6, in the embodiment that the number of blades 2 is one, the shielding assembly 3 may include a baffle plate 31, and the light transmitting hole 21 may be configured as a triangular hole. At this time, the first aperture hole 10 may be configured as a triangular hole. When the blade 2 and the baffle plate 31 both move in the first direction, it may achieve that the central axis of the first aperture hole 10 remains stationary relative to the substrate 1 while the size of the first aperture hole 10 is adjusted. Here, according to some embodiments, the light transmitting hole 21 may be configured as an equilateral triangular hole. In this way, when the central axis of the first aperture hole 10 is stationary relative to the substrate 1, it may also be ensured that the first aperture hole itself is the equilateral triangular hole when the size of the first aperture hole 10 changes.

In other embodiments of the present invention, as illustrated in FIG. 7, in the embodiment that the number of blades 2 is one, the shielding assembly 3 may include two baffle plates 31, each of the baffle plates 31 is movably arranged on the substrate 1, the light transmitting hole 21 may be configured to have at least two square sub holes arranged in the first direction and communicated in sequence, and the sizes of any two of the square sub holes are not the same. At this time, the first aperture hole 10 may be configured as a square hole. When the blade 2 and the two baffle plates 31 all move along the first direction, the two baffle plates 31 may be fitted with different square sub holes, thus, the adjustment of the size of the first aperture hole 10 may also be achieved. Here, when the blade 2 and the two baffle plates 31 all move in the first direction, the central axis of the first aperture hole 10 may also be stationary relative to the substrate 1.

In some embodiments of the present invention, in the embodiment that the blade 2 and the shielding assembly 3 are movably arranged on the substrate 1 in the first direction and the number of the blades 2 is at least two, as illustrated in FIGS. 1 to 4, the number of blades 2 may be two, and the shielding assembly 3 and the two light transmitting holes 21 may cooperatively form the first aperture hole 10 having a regular hexagonal shape. Here, it is well known to those skilled in the art that the closer the aperture is to the circle, the softer the out of focus effect of photographs taken by a lens assembly. Therefore, compared to the first aperture hole 10 that has the triangular shape, the square shape, or a pentagonal shape, the present invention designs the first aperture hole 10 as a regular hexagonal hole, which may make the out of focus effect of the photographs taken by the lens assembly with the first aperture hole 10 having the regular hexagonal shape softer. Moreover, the number of blades 2 is two, and the aperture structure is designed thinner in the second direction while ensuring the soft out of focus effect, thus facilitating arrangement of the aperture structure in a structure with narrow installation space, such as in the lens assembly. In other embodiments, in the embodiment that the blade 2 and the shielding assembly 3 are movably arranged on the substrate 1 in the first direction and the number of the blades 2 is a plurality, the shielding assembly 3 and the plurality of light transmitting holes 21 may cooperatively form the first aperture hole 10 having a regular polygonal shape with more than six edges, so that the out of focus effect of the photographs is softer.

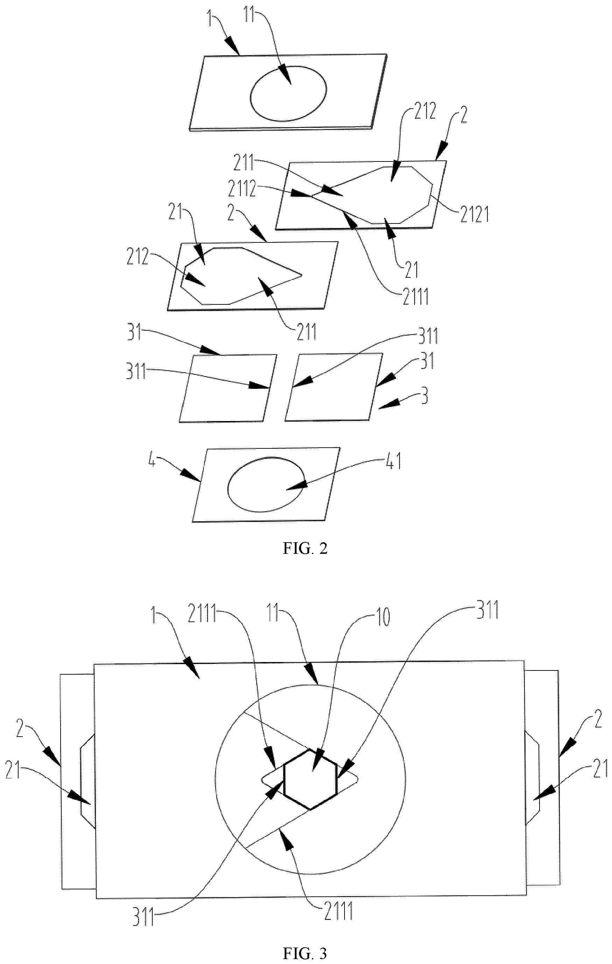

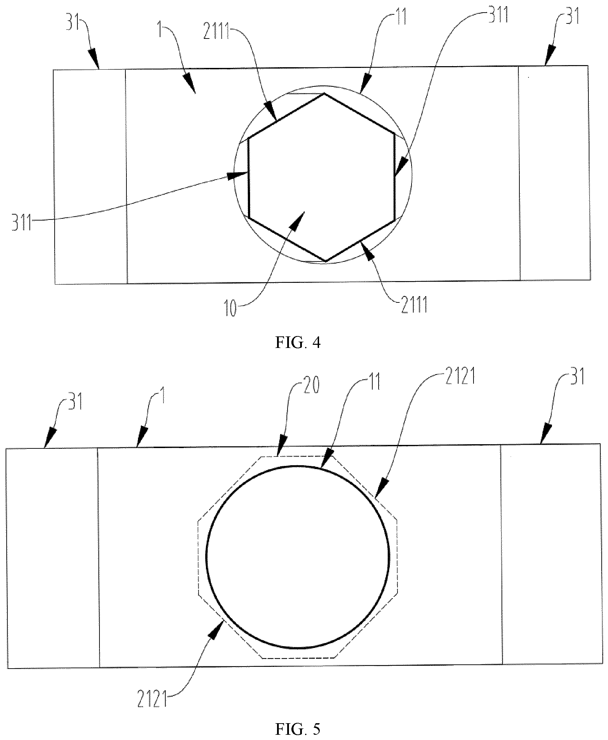

In an optional embodiment, in the embodiment that the first aperture hole 10 is a regular hexagonal hole, as illustrated in FIGS. 1 to 4, the shielding assembly 3 may include two baffle plates 31, each of the baffle plates 31 is movably arranged on the substrate 1 in the first direction, and each of the baffle plate 31 has a straight edge 311. In this way, the two baffle plates 31 may move towards each other or move away from each other in the first direction, which achieves that two straight edges 311 move away from each other or move towards each other in the first direction. The light transmitting hole 21 may have a first sub hole 211 having a triangular shape, two first edges 2111 of the first sub hole 211 form an vertex angle 2112, and a center line of the first sub hole 211 at the vertex angle 2112 extends along the first direction. When the blades 2 move, two first edges 2111 of two first sub holes 211 at a same side may be crossed, and the two straight edges 311 of the two baffle plates 31 and the two first sub holes 211 cooperatively form the first aperture hole 10. Here, as illustrated in FIG. 3, the size of the first aperture hole 10 is smaller; and as illustrated in FIG. 4, the size of the first aperture hole 10 is larger. Moreover, as illustrated in FIGS. 3 and 4, when the two first edges 2111 of the two first sub holes 211 at the same side are crossed, and when two vertex angles 2112 move away from each other and the two baffle plates 31 move away from each other, the size of the first aperture hole 10 may be increased. When the two vertex angles 2112 approach each other and the two baffle plates 31 approach each other, the size of the first aperture hole 10 may be reduced. Therefore, when the two baffle plates 31 and the two blades 2 move in the first direction, the stepless adjustment of the size of the first aperture hole 10 may be achieved. In addition, when the two baffle plates 31 and the two blades 2 move simultaneously, continuous adjustment of the size of the first aperture hole 10 may be achieved. Therefore, a wide range of adjustment of the size of the first aperture hole 10 may be realized while the baffle plate 31 and the blades 2 have a small movement distance. In this way, the aperture structure in the present invention may be designed to be miniaturized and occupy less space when applied to the lens assembly, and the wide range of adjustment of the size of the first aperture hole 10 may enable the lens assembly to be applied to various usage scenarios.

In some embodiments of the present invention, as illustrated in FIGS. 1 to 4, the two straight edges 311 of the two baffle plates 31 may be adjacent in the first direction. Therefore, the movement distance of the baffle plate 31 may be shortened, which is conducive to the miniaturization of the aperture structure.

In some embodiments of the present invention, as illustrated in FIG. 2, the baffle plate 31 may be configured as a rectangular plate. Therefore, during the assembly of the aperture structure, any one of edges of the baffle plate 31 may be configured as the straight edge 311. Therefore, the baffle plate 31 configured as the rectangular plate is conducive to the installation of the baffle plate 31.

In some embodiments of the present invention, as illustrated in FIGS. 1 and 2, thicknesses of the two baffle plates 31 in the second direction may be the same, thus facilitating the two baffle plates 31 to move away from each other or move towards each other.

In some embodiments of the present invention, as illustrated in FIGS. 1 and 2, the blades 2 may be arranged between the substrate 1 and the baffle plates 31. In this way, compared to the way of arranging the baffle plates 31 between the two blades 2, the blades 2 arranged between the substrate 1 and the baffle plates 31 is conducive to the smooth movement of each of the blades 2, that is, this design may avoid the baffle plates 31 affecting the smoothness of the movement of the blades 2. The baffle plates 31 may also be arranged between the two blades 2.

In some embodiments of the present invention, as illustrated in FIGS. 1, 2 and 5, the substrate 1 may have a through hole 11, and the first aperture hole 10 is arranged such that a projection of the first aperture hole 10 in the second direction is located in the through hole 11, that is, the light transmission area of the first aperture hole 10 is smaller than the light transmission area of the through hole 11, and the first aperture hole 10 transmits light through the through hole 11. In this way, the light transmitting hole 21 may have a second sub hole 212 in communication with the first sub hole 211. When the blades 2 move, two second sub holes 212 may form a hole 20 fully exposing the through hole 11, the hole 20 being referred to also as an avoidance hole 20. When the blades 2 move to a position where a projection of the through hole 11 in the second direction is located in the avoidance hole 20, the through hole 11 may be configured as a second aperture hole. That is, the area of the avoidance hole 20 is greater than the light transmission area of the through hole 11. In this way, when the first aperture hole 10 cannot meet the usage scenarios of the lens assembly, the two blades 2 may be enabled to form the avoidance hole 20, and the two baffle plates 31 may be in a position of avoiding the through hole 11. At this time, the through hole 11 may be configured as the second aperture hole. Herein, the light transmission area of the through hole 11 is greater than the light transmission area of the first aperture hole 10, therefore, configuring the through hole 11 as the second aperture hole may meet the usage scenarios of a large aperture of the lens assembly. In addition, since the second sub hole 212 is in communication with the first sub hole 211, the two blades 2 may quickly form the avoidance hole 20 under a small movement distance, thereby facilitating the miniaturization of the aperture structure. Here, the specific shape of the through hole 11 is not limited in the present invention, which thus may be adaptively designed according to the needs in the present invention. Therefore, the second aperture hole is configured as different shapes, facilitating the application of the lens assembly in more usage scenarios.

In an optional embodiment, as illustrated in FIGS. 1 to 5, the through hole 11 may be configured as a circular hole. Therefore, when the through hole 11 is configured as the second aperture hole, the out of focus effect of photographs taken by the lens may be softer. In other embodiments, the through hole 11 may also be configured as an octagonal hole or a hexadecagonal hole, which is not limited in the present invention.

In an optional embodiments, as illustrated in FIGS. 1, 2, and 5, the second sub hole 212 has five second edges 2121 connected in sequence, and when the blades 2 move, the two second sub holes 212 may form the avoidance hole 20 having an octagonal shape. In this way, the avoidance hole 20 having the octagonal shape is conducive to avoiding the through hole 11, so that the through hole 11 is configured as the second aperture hole. In other embodiments, the second sub hole 212 may also be configured as a semicircular hole, and the two second sub holes 212 may form the avoidance hole 20 having a circular shape. Alternatively, two avoidance holes 20 may also be formd in a hexagonal shape or a decagonal shape, which is not limited by the present invention.

In other embodiments of the present invention, as illustrated in FIGS. 1, 2 and 5, the substrate 1 may have the through hole 11, and the first aperture hole 10 is arranged such that the projection of the first aperture hole in the second direction is located in the through hole 11, that is, the light transmission area of the first aperture hole is smaller than the light transmission area of the through hole, and the first aperture hole transmits light through the through hole. In this way, the light transmitting hole 21 may have the second sub hole 212 in communication with the first sub hole 211. When the blades 2 move, two second sub holes 212 may form the avoidance hole 20, and a shape and size of the avoidance hole 20 are the same as that of the through hole 11. When the blades 2 move to a position where a center axis of the avoidance hole and a center axis of the through hole 11 are collinear, the through hole 11 may be configured as the second aperture hole. In this way, when the first aperture hole 10 cannot meet the usage scenarios of the lens assembly, the two blades 2 may be enabled to form the avoidance hole 20, and the two baffle plates 31 are in a position of avoiding the through hole, at this time, the through hole 11 may be configured as the second aperture hole. Herein, the light transmission area of the through hole 11 is greater than the light transmission area of the first aperture hole 10. Therefore, configuring the through hole 11 as the second aperture hole may meet the usage scenarios of the large aperture of the lens assembly. In addition, since the second sub hole 212 is in communication with the first sub hole 211, the two blades 2 may quickly form the avoidance hole 20 under a small movement distance, thereby facilitating the miniaturization of the aperture structure. Here, the specific shape of the through hole 11 is not limited in the present invention, which thus may be adaptively designed according to the needs in the present invention. Therefore, the second aperture hole is configured as different shapes, facilitating the application of the lens assembly in more usage scenarios.

In an optional embodiment, the through hole 11 may be configured as a circular hole, the second sub hole 212 may be configured as a semicircular hole, and the two second sub holes 212 may form a circular avoidance hole 20. Therefore, when the through hole 11 is configured as the second aperture hole, the out of focus effect of photographs taken by the lens may be softer.

In other embodiments of the present invention, the substrate 1 may have the through hole 11, and the first aperture hole 10 is arranged such that the projection of the first aperture hole in the second direction is located in the through hole 11, that is, the light transmission area of the first aperture hole 10 is smaller than the light transmission area of the through hole 11, and the first aperture hole 10 transmits light through the through hole 11. In this way, when the blades 2 and the baffle plates 31 move to be staggered with the through hole 11, the through hole 11 may be configured as the second aperture hole. In this way, when the first aperture hole 10 cannot meet the usage scenarios of the lens assembly, the blades 2 and the baffle plates 31 may be in a position of avoiding the through hole 11, at this time, the through hole 11 may be configured as the second aperture hole. Herein, the light transmission area of the through hole 11 is greater than the light transmission area of the first aperture hole 10. Therefore, configuring the through hole 11 as the second aperture hole may meet the usage scenarios of a large aperture of the lens assembly. Here, the specific shape of the through hole 11 is not limited in the present invention, which thus may be adaptively designed according to the needs in the present invention. Therefore, the second aperture hole is configured as different shapes, facilitating the application of the lens assembly in more usage scenarios.

In addition, as illustrated in FIGS. 1 and 2, the aperture structure may include a base 4, and the base 4 has a light through hole 41 with the same shape as the through hole 11. The size of the light through hole 41 is the same as that of the through hole 11, and the blades 2 and baffle plates 31 may be arranged between the base 4 and the substrate 1, thereby improving the stability of the blades 2 and the baffle plates 31 when moving.

A specific use process of the aperture structure will be described in detail below in the present invention in conjunction with the above specific embodiments. First, the base 4, the two baffle plates 31, the two blades 2, and the substrate 1 are sequentially stacked together in the second direction. At this time, as illustrated in FIG. 3, the first aperture hole 10 may be configured as a regular hexagonal hole, and the size of the first aperture hole 10 is smaller. When the size of the first aperture hole 10 needs to be increased, the two vertex angles 2112 of the two blades 2 may be moved away from each other, and the two baffle plates 31 are moved away from each other. At this time, as illustrated in FIG. 4, the size of the first aperture hole 10 is larger. When the size of the first aperture hole 10 needs to be reduced, the two vertex angles 2112 of the two blades 2 may be moved towards each other, and the two baffle plates 31 are moved towards each other. At this time, the size of the first aperture hole 10 may be reduced. When it is necessary to configure a circular through hole 11 as the second aperture hole, two baffle plates 31 may be moved to avoid the through hole 11, and two blades 2 are moved, so that the two second sub holes 212 form an octagonal avoidance hole 20, and the projection of the through hole 11 in the second direction is located in the avoidance hole 20. At this time, as illustrated in FIG. 5, the through hole 11 is configured as the second aperture hole.

According to a second aspect of the present invention, a lens assembly is provided, including an aperture structure as described above. This lens assembly has all the beneficial effects of the aperture structure described above, which will not be repeated herein. Here, in the embodiment that the lens assembly has the aperture structure, its own miniaturization design may be achieved, thereby facilitating arranging the lens assembly in a terminal, such as a mobile phone.

According to some embodiments, when the lens assembly is actually used, an appropriate aperture size may be selected according to different shooting purposes and scenes. Generally speaking, when shooting portrait close-ups, details of flowers and plants, and other subjects that need to highlight the subject and background blur, a large aperture may be chosen. When shooting landscapes, architecture, still life, and other subjects that need to maintain a clear panoramic view and a large depth of field, a small aperture may be chosen. When shooting nighttime lighting, starry sky, and other subjects that require a starry effect, a small aperture may be chosen.

According to a third aspect of the present invention, a terminal is provided, including a lens assembly as described above. This terminal has all the beneficial effects of the lens assembly described above, which will not be repeated herein. Here, the present invention does not limit the specific types of terminals. According to some embodiments, the terminal may be a mobile terminal, such as a mobile phone, a tablet computer, a laptop computer, etc. The terminal may also be a wearable terminal, for example, the wearable terminal may be a wristband, a smart watch, etc. In addition, the terminal may also be an intelligent camera controlled remotely, or be a drone controlled remotely.

The preferred embodiment of the present invention is described in detail above in conjunction with the drawings, however, the present invention is not limited to the specific details in the above embodiment, a variety of simple variants of the technical solution of the present invention may be made within the scope of the technical conception of the present invention, and these simple variants all fall within the protection scope of the present invention.

## Claims

1. An aperture structure, comprising:
a substrate (1);
a blade (2) having a light transmitting hole (21); and
a shielding assembly (3), the shielding assembly (3) and the light transmitting hole (21) forming a first aperture hole (10) having a polygonal shape,
wherein the blade (2) and/or the shielding assembly (3) are movably arranged on the substrate (1) in a first direction, to change a size of the first aperture hole (10).

2. The aperture structure according to claim 1, wherein the blade (2) and the shielding assembly (3) are movably arranged on the substrate (1) in the first direction.

3. The aperture structure according to claim 1 or 2, comprising at least two blades (2), wherein the at least two blades (2) are stacked together with the shielding assembly (3) in a second direction perpendicular to the first direction, and the shielding assembly (3) and at least two light transmitting holes (21) cooperatively form the first aperture hole (10) having the polygonal shape.

4. The aperture structure according to claim 3, comprising two blades (2), wherein the shielding assembly (3) and the two light transmitting holes (21) cooperatively form the first aperture hole (10) having a regular hexagonal shape.

5. The aperture structure according to claim 4, wherein the shielding assembly (3) comprises two baffle plates (31), each of the two baffle plates (31) is movably arranged on the substrate (1) in the first direction, and each of the two baffle plates (31) has a straight edge (311);
each light transmitting hole (21) has a first sub hole (211) having a triangular shape, two first edges (2111) of each first sub hole (211) form a vertex angle (2112), and a center line of each first sub hole (211) at the vertex angle (2112) extends along the first direction; when the two blades (2) move, two first edges (2111) of two first sub holes (211) at a same side are crossed; and
two straight edges (311) of the two baffle plates (31) and the two first sub holes (211) cooperatively form the first aperture hole (10).

6. The aperture structure according to claim 5, wherein the two straight edges (311) of the two baffle plates (31) are adjacent in the first direction.

7. The aperture structure according to claim 5 or 6, wherein the two blades (2) are arranged between the substrate (1) and the two baffle plates (31).

8. The aperture structure according to any one of claims 5 to 7, wherein the substrate (1) has a through hole (11), and the first aperture hole (10) is arranged such that a projection of the first aperture hole (10) in the second direction is located in the through hole (11);
each light transmitting hole (21) has a second sub hole (212) in communication with the first sub hole (211), and when the two blades (2) move, two second sub holes (212) form an avoidance hole (20); and
when the two blades (2) move to a position where a projection of the through hole (11) in the second direction is located in the avoidance hole (20), the through hole (11) is configured as a second aperture hole.

9. The aperture structure according to claim 8, wherein the through hole (11) is configured as a circular hole.

10. The aperture structure according to claim 8 or 9, wherein each second sub hole (212) has five second edges (2121) connected in sequence, and when the two blades (2) move, the two second sub holes (212) form the avoidance hole (20) having an octagonal shape.

11. The aperture structure according to any one of claims 5 to 10, wherein each of the two baffle plates (31) is configured as a rectangular plate.

12. The aperture structure according to any one of claims 5 to 11, wherein the two baffle plates (31) has a same thickness in the second direction.

13. The aperture structure according to any one of claims 1 to 12, wherein the shielding assembly (3) and/or the blade (2) adjusts the size of the first aperture hole (10) by means of linear motion.

14. A lens assembly, comprising an aperture structure according to any one of claims 1 to 13.

15. A terminal, comprising a lens assembly according to claim 14.
